# EUROPEAN PATENT SPECIFICATION

(11) **EP 1 920 118 B1**
(45) Date of publication and mention of the grant of the patent: **24.04.2013**
(21) Application number: 06778152.6
(22) Date of filing: 03.08.2006
(51) Int. Cl.: E04B 2/74

(54) **Two-part panel connecting device having mutually cooperating coupling surfaces**
Zwei-teilige Paneelverbindungsvorrichtung mit wechselseitig zusammenarbeitenden Verbindungsflächen
Dispositif de connexion de panneau à deux parties ayant surfaces d'accouplement coopérant mutellement

(30) Priority: 30.08.2005 IT BG20050045
(43) Date of publication of application: 14.05.2008
(73) Proprietor: Gotti, Matteo, 24128 Bergamo (IT)
(72) Inventor: Gotti, Matteo, 24128 Bergamo (IT)
(74) Representative: Giavarini, Francesco
(86) International application number: PCT/EP2006/065020
(87) International publication number: WO 2007/025835

(56) References cited:
- DE-C1- 10 218 713
- DE-U1- 29 716 396
- US-A- 2 142 305

## Description

This invention relates to a device for connecting components of a panel structure preferably for use in the preparation of trade fair stands, display panels, component partition walls and the like. The invention also relates to a component a panel structure and to a structure comprising such component.

It is known that panel structures are used to create stands at trade fairs. These structures usually comprise a plurality of panels connected together by various removable connection systems for the purpose of enabling the continuous reuse of the panels.

A large number of the connection systems conventionally used for this purpose rely on the use of cross plates or brackets, which are screwed onto two adjacent panels generally in correspondence with their upper and lower edges. On this subject, the patent application JP3129030, for instance, describes the use of a connection bracket placed inside two grooves, each of which is provided on the upper edge of one of the two panels being connected. Each of the two ends of the bracket is anchored to one of the two grooves, thereby enabling the connection of the panels.

The patent application JP2000179217, on the other hand, describes a different technical solution, which can be considered to exemplify a second type of connection system based on the use of at least one vertical connection element, placed in between the two panels being connected. More specifically, this second patent application concerns the use of a first and a second vertical elements, each engaged to a lateral edge of one of the two panels. These elements are mechanically coupled to a third interfacing element, which substantially serves as an upright for the resulting structure.

The patent application JP9195425 describes an alternative solution, which consists of a single vertical connection element with two shaped ends, each of which is inserted in a groove provided along the edge of one of the two panels. The patent application DE 29716396 and the patent US 2142305 disclose other connection systems traditionally used, the latter disclosing a device according to the preamble of claim 1.

Although they are relatively effective from the functional standpoint, the above-described connection systems, and other structurally similar solutions, present practical and economic disadvantages.

From the practical point of view, for instance, connection systems with plates always demand the positioning of at least one upper plate and one lower plate to ensure a safe anchorage of the two panels. More specifically, the installation of the lower plate proves rather difficult for a single installer, since it involves lifting both the panels. This means that the assembly of a panel structure constructed in this way necessitates the simultaneous action of more than one installers, with a consequent increase in the final costs.

It is also important to point out that, in the majority of cases, the plates are attached to the panels with fixing screws or equivalent means. This entails an inevitable wear and tear of the panels in the area where the screws are attached, and the consequent need to undertake maintenance to restore the functionality of the connection.

Connection systems with intermediate elements are not very convenient, particularly in economic terms, because they generally demand various preliminary operations to prepare the panels, e.g. to fix the intermediate elements in place.

From the practical standpoint, moreover, the installation of such intermediate elements is not very easy, especially in the case of tall panels.

Clearly, therefore, both the types of device analyzed present evident problems in the assembly of the panel structures, and the same difficulties are naturally encountered when it comes to dismantling the structures.

In the light of these considerations, there is consequently an evident need to design connection devices affording a valid alternative to those in conventional use, both from the point of view of practicality of installation and from the economic standpoint.

Thus, the main object of the present invention is to provide a device for the connection of two components of a panel structure that enables the above-mentioned drawbacks to be overcome.

Within the scope of said technical aim, one object of the present invention is to provide a connection device consisting of a limited number of elements that are easy to assemble together.

Another object of the present invention is to provide a connection device that enables an easy connection of the components of the panel structure.

A further object of the present invention is to provide a connection device that enables a single installer to assemble panel structures even of considerable dimensions.

Another, not necessarily final object of the invention is to provide a connection device that is highly reliable and relatively easy to construct at competitive costs.

This technical aim and the aforementioned objects, and any others that become apparent in the following pages, are achieved by a device according to claim 1.

Thanks to its structural simplicity and distinctive functional principle, the connection device, according to the invention, easily enables an installer to connect components of the panel structure using a limited number of operations, with an advantageous return in terms of related times and costs.

Further characteristics and advantages of the present invention will become more apparent from the description of preferred, but not exclusive, embodiments of the connection device according to the present invention, as illustrated by way of example in the attached drawings, wherein:
- figures 1 and 2 are respectively a first and a second perspective view of a first and a second embodiment of the connection device according to the invention;
- figures 3 and 4 are lateral views of the embodiments illustrated in figures 1 and 2;
- figure 4a is a cross-section of the connection device according to the invention of figure 4;
- figures 4b and 4c are schematic views relating to two not embodiments of the device n according to the invention;
- figures 5 and 5a respectively show a front view and a cross-section along the line I-I of a first element of a connection device according to the invention;
- figures 6 and 6a respectively show a front view and cross-section along the line II-II of a second element of a connection device according to the invention;
- figure 7 is a first perspective view relating to components of a panel structure according to the invention;
- figure 8 is a first lateral view of components of a panel structure according to the invention;
- figures 9 and 9a respectively show a perspective view and a lateral view of a first embodiment of a panel structure according to the present invention;
- figures 10 and 10a respectively show a perspective view and a lateral view of a second embodiment of a panel structure according to the invention;
- figure 11 is a perspective view of a further embodiment of a panel structure according to the invention.

With reference to the above-mentioned figures, the connection device 1 according to the invention comprises a first element 10 with at least one first shaped coupling surface 11 and first fixing means 61 suitable for attaching the first element 10 to a first component 15, preferably for use in a panel structure. The second element 20 has a second coupling surface 21 fitting the first coupling surface 11 and second fixing means 62 suitable for attaching the second element 20 to a second component 25.

The connection device 1 according to the invention is also characterized in that it comprises connection means 50 suitable for exerting a force sufficient to bring the second element 20 up against the first element 10 in correspondence of the aforesaid coupling surfaces 11 and 21. As will emerge more clearly below in the description, the connection means 50 act in such a manner that the surfaces 11 and 21 come into mutual contact, thereby connecting the two elements 10 and 20 and consequently joining the two components 15 and 25 to which the elements are attached.

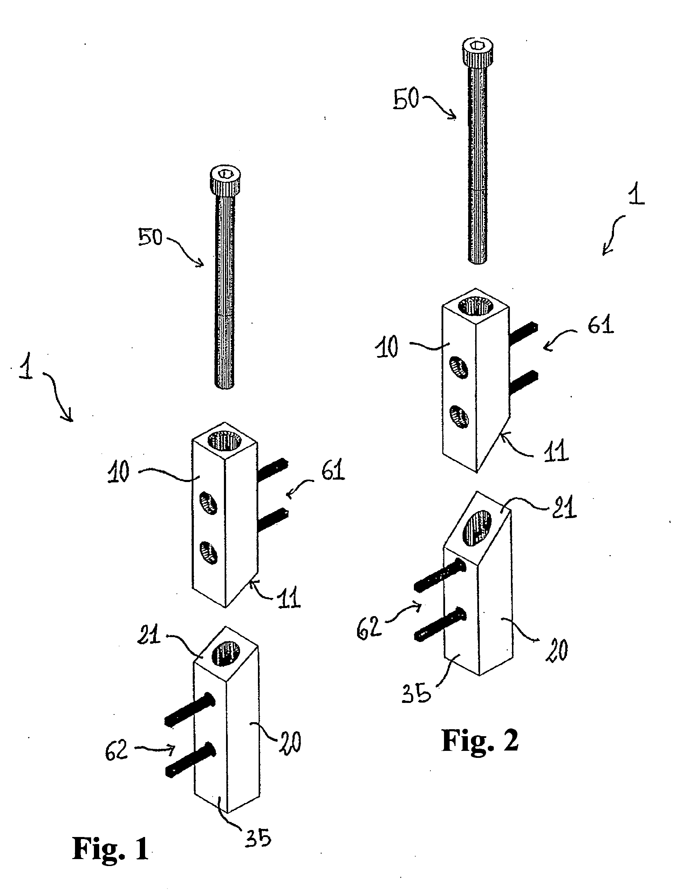

Figures 1 and 2 relate to a first and a second possible embodiment of the connection device 1 according to the invention. In both the solutions illustrated, the first element 10 and the second element 20 are substantially in the shape of a prism with a rectangular cross-section. In these two solutions, the two coupling surfaces 11 and 21 are flat and slope at a predefined angle ά with respect to a plane X lying substantially at right angles to the longitudinal axis of the corresponding element 10 or 20.

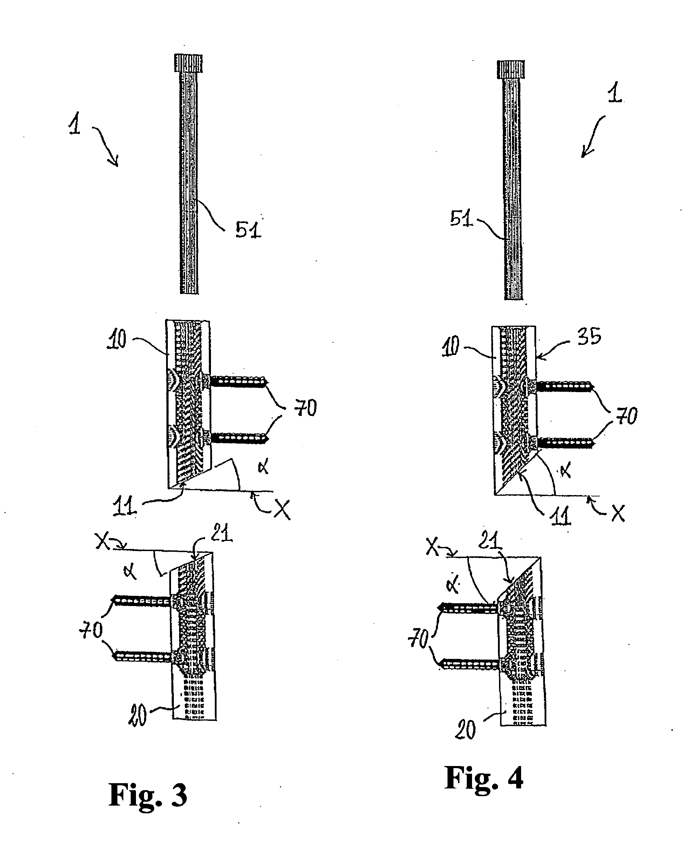

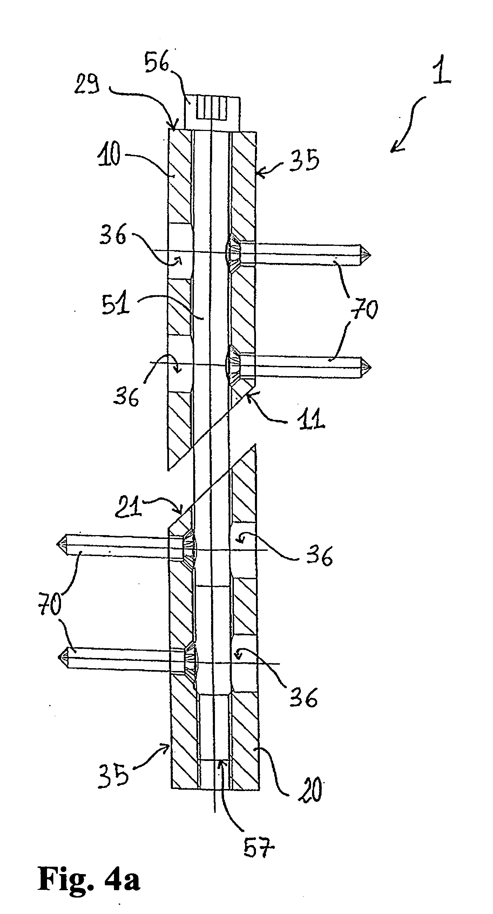

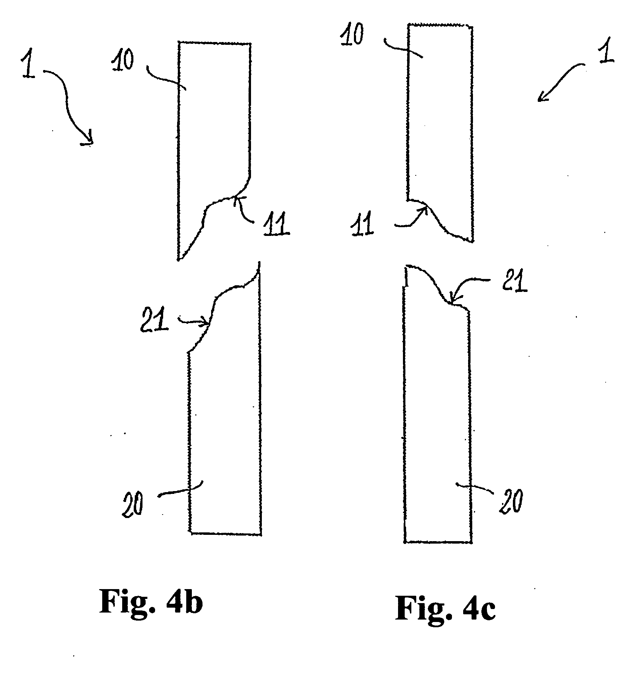

Figures 3 and 4 are side views of the two embodiments of the device 1 illustrated in figures 1 and 2, respectively. More specifically, in the solution illustrated in figure 3, the coupling surfaces have an angle of inclination α of 30°, while in figure 4 the inclination of the coupling surfaces 11 and 21 is 45°. Figures 4b and 4c illustrate two embodiments of the device 1 not in the scope of the invention, wherein the coupling surfaces 11 and 21 have a profile substantially in the shape of a curved line.

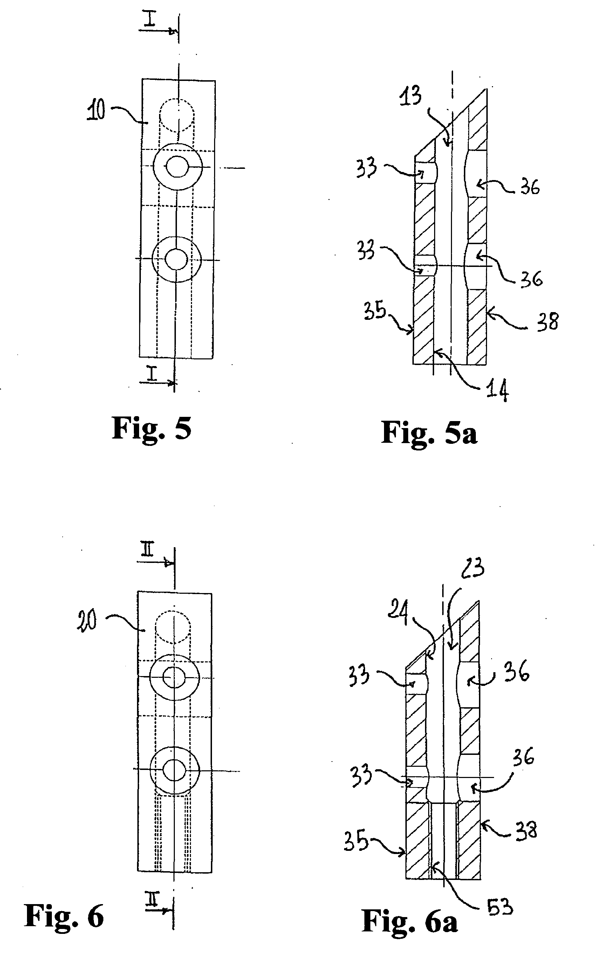

Figures 4a, 5, 5a, 6 and 6a show details of the internal structure of the elements 10 and 20 illustrated in figures from 1 to 4. More specifically, the first element 10 and second element 20 respectively comprise a first 13 and a second longitudinal cavity 23 for containing said connection means 50 and at least one first set of cross holes 33 for inserting the corresponding fixing means 61 and 62. The latter can advantageously consist of two commercially available screws 70. With reference in particular to figure 4a, the screws 70 are inserted in the holes 33 so that their head comes to rest up against the inside wall 14 or 24 (see figures 5a and 6a) of the corresponding longitudinal cavity 13 or 23 of the structural elements 10 and 20.

For the purpose of positioning the screws 70, the cross holes 33 pass right through the body of the elements 10 or 20 in which they are made and the screws 70 are inserted so as to extend beyond a first side 35 of the element in question. The cross holes 33 have a radial widening 36 on the second side 38 of the element 10 or 20 (substantially opposite the first side 35) to facilitate the insertion of the screws 70.

According to a preferred embodiment of the invention illustrated in figure 4a, the connection means 50 comprise an axial tie rod 51 suitable to be inserted inside the first 13 and second 23 longitudinal cavities in the two structural elements 10 and 20 of the connection device 1 in order to be screwed into a threaded body to generate the contact force needed to connect the two elements. To be more specific, the axial tie rod 51 is inserted in the first cavity 13 of said first element 10, and is screwed into a first threaded stretch 53 obtained inside said second cavity 23.

In an alternative embodiment (not shown in the figures) the axial tie rod 51 could be inserted right through the two longitudinal cavities 13 and 23 of the two elements 10 and 20 and then be screwed onto a nut outside the elements 10,20.

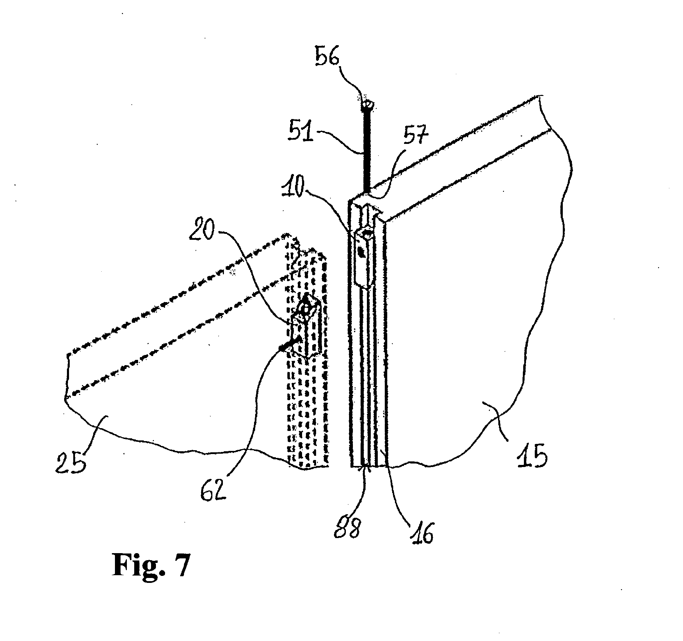

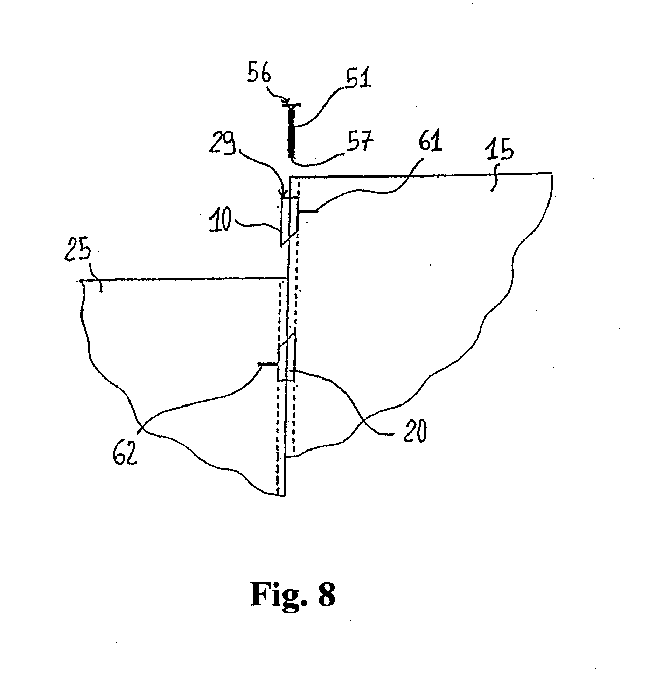

Figures 7 and 8 show a possible application of the connection device 1 according to the invention and are taken for reference below to describe the installation methods and operating principle of the device. With reference to figure 7, the first structural element 10 is attached to a first component 15 with first fixing means (not shown), while the second structural element 20 is attached to a second component 25 by means of second fixing means 62. The two components 15 and 25 are then juxtaposed so that the two coupling surfaces 11 and 21 are mutually oriented (see figure 8) and can thus be subsequently coupled as a result of the locking action exerted by the connection means 50. For this purpose, the axial tie rod 51 is inserted in the first longitudinal cavity 13 so that its head 56 comes to rest on the flat end 29 of the first element 10 and its terminal component 57 is screwed into the threaded stretch 53 obtained on the inside of the second longitudinal cavity 23 in the second element 20. The action of screwing of the tie rod 51 brings the coupling surfaces 11 and 21 into mutual contact and thereby makes the connection between the two elements 10 and 20 of the device 1, and thus of the two components 15 and 25.

The above description clearly demonstrates the ease of installation that distinguishes the connection device 1. In particular, the first element 10 and second element 20 can be separately attached to the corresponding components 15 and 25 and only subsequently coupled by means of a simple screwing action on the axial tie rod 51.

For this purpose, the dimensions of the first longitudinal cavity 13 are advantageously larger than the diameter of the tie rod 51 to facilitate its insertion. In fact, the slack between these two components facilitates the installer to position the tie rod 51 correctly even if the two longitudinal cavities 13 and 23 are initially not perfectly aligned. The subsequent screwing action induces the alignment of the two cavities and consequently achieves a precise connection of the two elements 10 and 20 of the device 1. In this sense, the use of the shaped, preferably slanting, coupling surfaces 11 and 21 is particularly advantageous because it facilitates this alignment by enabling an initial mutual sliding between the two elements 10 and 20.

It is important to point out that the simplicity with which the two components 15 and 25 are connected also applies to their separation, thanks to the design of the connection device 1. In fact, the components can easily be separated by a single installer simply by unscrewing the axial tie rod 51 and subsequently separating the two components 15 and 25.

The present invention also relates to a component 15 or 25, preferably for use in a panel structure, characterized in that it comprises at least one first element 10 and/or at least one second element 20 of a connection device 1 according to the present invention. The previously mentioned figure 7, in particular, illustrates a first component 15 and a second component 25 according to the invention forming a panel shaped body. Each of said components 15 and 25 comprise a longitudinal groove 88 created in a perimeter edge 16. With reference to figure 8, the purpose of the groove 88 is to contain the first element 10 and/or the second element 20, generating a space between the two adjacent edges 16 that completely contains the connection device 1. The two edges 16 can thus touch one another, thereby assuring surface continuity and improving the aesthetic appearance of the structure.

With reference to figure 8, it should be noted that the two grooves 88 advantageously function as a guide for the coupling of the two components 15 and 25. The first component 15, for instance, can be substantially brought up against the second component 25 so that the corresponding elements 10 and 20 come to be mutually inserted in the two grooves 88 and subsequently guided along the grooves 88 into the right position.

Here again, the solution described is obviously considered preferable, but it is certainly not exclusive. In fact, the concept of the invention also covers the possibility of having no such surface continuity, making the components 15 and 25 without the aforementioned grooves 88, or attaching the elements 10 and 20 of the device 1 to the two components 15 and 25 in positions other than the perimeter edges 16.

The present invention also relates to a structure 2 characterized in that it comprises at least a first component 15 and a second component 25 mutually connected by means of a connection device 1 according to the present invention. In a preferred embodiment of the invention, the first component 15 comprises a plurality of first elements 10, while the second component 25 comprises a plurality of second elements 20, and at least one of the first elements 10 is connected to a corresponding second element 20 by the connection means 50.

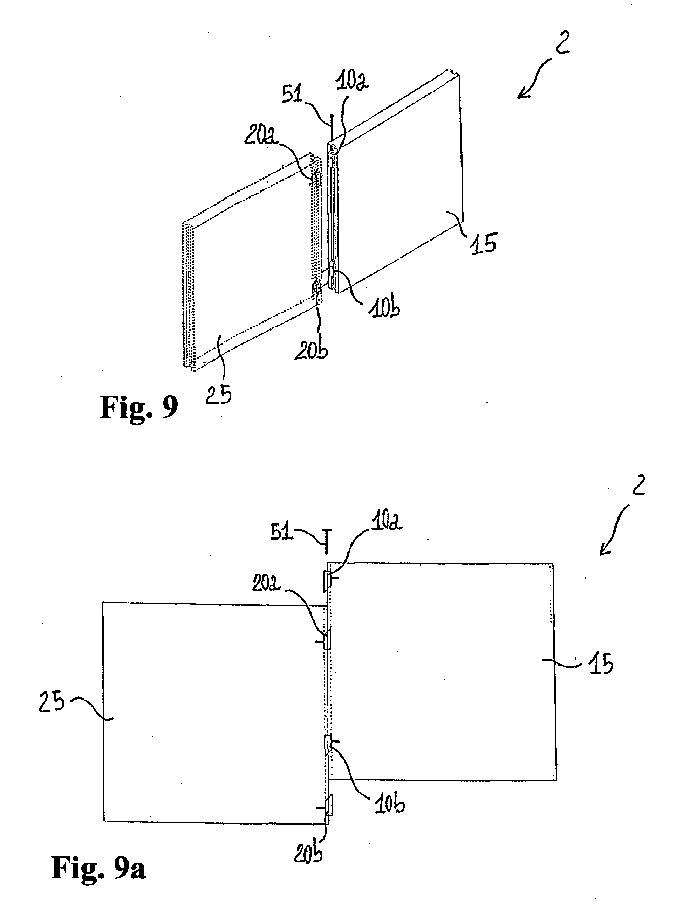

Figures 9 and the 9a illustrate a panel structure 2 before and during its assembly. As illustrated, a first component 15 is complete with a first upper element 10a and a first lower element 10b attached to the inside of a longitudinal groove 88 in a perimeter edge 16 of the panel. A second component 25 is complete with a second upper element 20a and a second lower element 20b, also attached to the inside of a corresponding groove 88. As shown in figure 9a, the two components 15 and 25 are assembled by connecting the first upper element 10a in correspondence of the first upper element 20a, and the first lower element 10b in correspondence of the second lower element 20b. In the solution illustrated, the first upper element 10a and the second upper element 20a are connected together by means of an axial tie rod 51 in the manner previously explained. The screwing action of the tie rod 51 generates a force capable of connecting together not only the two upper elements 10a and 20a, but also the first lower element 10b and the second lower element 20b, thereby also connecting the two components 15 and 20 of the structure 2 in a second point.

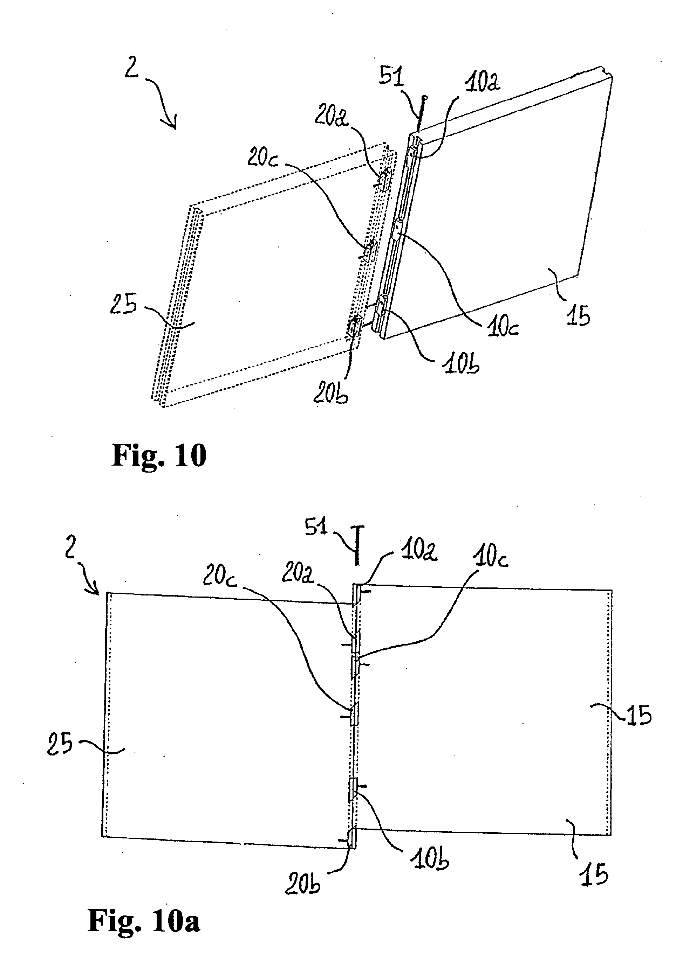

Figures 10 and 10a illustrate a structure similar to the one shown in figures 9 and 9a, distinguishable in that the two components 15 and 25 respectively also comprise a first intermediate element 10c and a second intermediate element 20c. The presence of a third pair of intermediate elements 10c and 20c creates a more stable connection between the two components 15 and 25, by generating a further link between the same. This solution proves component particularly advantageous when the height of the structure 2, and consequently of the components 15 and 25, is considerable.

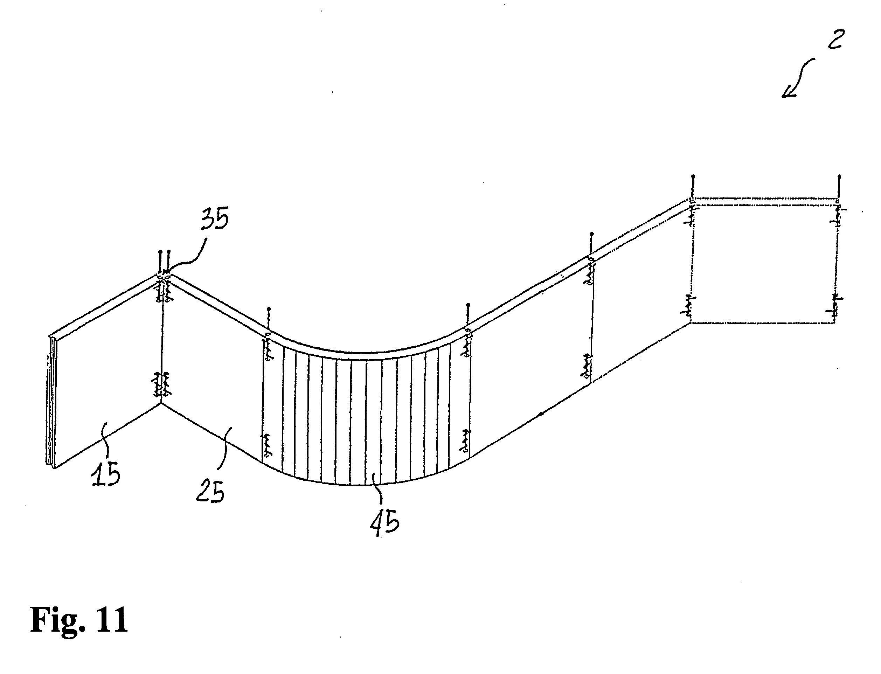

Figure 11 shows a panel structure comprising various panels that are mutually connected together according to the previously described method. The structure 2 illustrated in the figure is merely an example to give an idea of another advantage of the present invention relating to the opportunity to connect together panels that have different shapes and curvatures.

To be more specific, the structure 2 comprises a pair of components 15 and 25 mutually arranged substantially at a right angle thanks to the use of a third component 35 comprising a peg-shaped body. Basically, each of the components 15 and 25 is connected to the peg 35 according to the method already illustrated above for connecting two panel-shaped components.

In the structure illustrated in figure 11, moreover, a curved panel 45 is connected on either side to a panel-shaped body. Thanks to the connection device 1 according to the invention, a single installer has no difficulty in either creating this type of connection, or in dismantling such a connection, as and when necessary.

The technical solutions adopted for the connection device, for the panels and for the panel structure according to the invention fully satisfy the stated aims and objects. More specifically, the connection device consists of a limited number of elements, that are easily assembled and can be manufactured at competitive costs. The connection device according to the invention is also advantageous in that it enables the creation of structures, particularly ones that are easy to assemble and dismantle according to need.

The connection device and the panel structure thus conceived may be the object of numerous modifications and variants that all come within the context of the inventive concept as defined in the appended claims.

## Claims

1. Device (1) for the connection of components (15,25) of a panel structure **characterized in that** it comprises:
- a first element (10) comprising at least one first shaped coupling surface (11) and first fixing means (61) for connecting said first element (10) to a first (15) of said components, said first element (10) comprising a first longitudinal cavity (13);
- a second element (20) comprising at least one second shaped coupling surface (21) fitting said first surface (11) and second fixing means (62) for connecting said second element (20) to a second (25) of said components, said second element (20) comprising a second longitudinal cavity (23); said device (1) comprising connection means (50) contained in said cavities (13,23)
**characterized in that** said first and second shaped coupling surfaces (11) are flat and slope with respect to a plane (X) lying substantially at right angles to a longitudinal axis of said elements (10,20), said connection means (50) is arranged to exert a force sufficient to bring said second element (20) into contact with said first element (10) in correspondence of said shaped coupling surfaces (11,21).

2. Device (1) according to claim 1, **characterized in that** said elements (10,20) are substantially prism-shaped with a rectangular cross-section.

3. Device (1) according to claim 1 or 2, **characterized in that** said first (11) and second (21) shaped coupling surfaces slope at a 45° angle.

4. Device (1) according to claim 1 or 2, **characterized in that** said first (11) and second (21) shaped coupling surfaces slope at a 30° angle.

5. Device (1) according to one or more of the claims from 1 to 4, **characterized in that** said first (10) and second (20) elements comprise one or more holes (33) for positioning said first (61) and second fixing means (62).

6. Device (1) according to claim 5, **characterized in that** said positioning holes (33) are provided on a first side (35) of said first (10) and second (20) elements.

7. Device (1) according to claim 5 or 6, **characterized in that** said first (61) and/or second (62) fixing means consist of screws (70).

8. Device (1) according to claim 7, **characterized in that** said positioning holes (33) have a radial widening (36) to facilitate the insertion of said screws (70).

9. Device (1) according to one or more of the claims from 1 to 8, **characterized in that** said connection means (50) comprise an axial tie rod (51) suitable to be inserted in said first cavity (13) and to be screwed into a first threaded stretch (53) of said second cavity (23).

10. Device (1) according to one or more of the claims from 1 to 8, **characterized in that** said connection means (50) comprise an axial tie rod (51) for inserting through said first (13) and said second (13) cavities for screwing into a nut on the outside.

11. Component (15,25) of a structure **characterized in that** it comprises at least one first element (10) and at least one second element (20) of a device (1) according to one or more of the claims from 1 to 10, wherein said first and second elements are arranged to couple with corresponding first and second elements on a second like component via connection means (50) contained in the cavities of the first and second elements.

12. Component (15,25) according to claim 11, **characterized in that** it comprises a longitudinal groove (88) for containing said first (10) and/or said second element (20) of said device (1).

13. Component (15,25) according to claim 11 or 12, **characterized in that** it consists of a panel-shaped body.

14. Structure (2) **characterized in that** it comprises at least a first (15) and a second (25) component according to one or more of the claims from 11 to 13

15. Structure (2) according to claim 14, **characterized in that** said first (15) and second (25) components are connected together by means of a device (1) according to one or more of the claims from 1 to 10, said first (15) and second (20) components respectively comprise first (10) and second (20) elements connected together by connection means (50).

16. Structure (2) according to claim 15, **characterized in that** said first component (15) comprises a plurality of said first elements (10) and said second component (25) comprises a plurality of said second elements (20), each of said first elements (10) being connected to a corresponding second element (20) by said connection means (50).

17. Structure (2) according to claim 16, **characterized in that** said first component (15) comprises a first upper element (10a) and a first lower element (10b) of said plurality of said first elements and said second component (16) comprises a second upper element (20a) and a second lower element (20b) of said plurality of second elements, said first upper element (10a) being connected to said second upper element (20a) by said connection means (50).

18. Structure according to claim 17, **characterized in that** said first component (15) comprises a first intermediate element (10c) of said plurality of said first elements and said second component (25) comprises a second intermediate element (20c) of said plurality of second elements, said first upper element (10a) being connected to said second upper element (20a) by said connection means (50).

## Patentansprüche

1. Vorrichtung (1) zur Verbindung von Komponenten (15, 25) einer Paneelkonstruktion, **dadurch gekennzeichnet, dass** sie umfasst:
- ein erstes Element (10), das wenigstens eine erste ausgeformte Verbindungsfläche (11) und erste Befestigungsmittel (61) zur Verbindung des ersten Elements (10) mit einer ersten (15) dieser Komponenten umfasst, wobei das erste Element (10) einen ersten längsgerichteten Hohlraum (13) umfasst;
- ein zweites Element (20), das wenigstens eine zweite, der ersten ausgeformten Verbindungsfläche (11) angepasste, ausgeformte Verbindungsfläche (21) und zweite Befestigungsmittel (62) zur Verbindung des zweiten Elements (20) mit einer zweiten (25) dieser Komponenten umfasst, wobei das zweite Element (20) einen zweiten längsgerichteten Hohlraum (23) umfasst;
wobei diese Vorrichtung (1) in diesen Hohlräumen (13, 23) enthaltene Verbindungsmittel (50) umfasst;
**dadurch gekennzeichnet, dass** die erste und die zweite ausgeformte Verbindungsfläche (11, 21) flach und in Bezug auf eine im Wesentlichen rechtwinklig zu einer Längsachse dieser Elemente (10, 20) verlaufenden Ebene (X) geneigt sind, und dieses Verbindungsmittel (50) angeordnet ist, um eine Kraft auszuüben, die ausreichend ist, das zweite Element (20) mit dem ersten Element (10) unter Zusammenwirken der ausgeformten Verbindungsflächen (11, 21) in Kontakt zu bringen.

2. Vorrichtung (1) nach Anspruch 1, **dadurch gekennzeichnet, dass** diese Elemente (10, 20) im Wesentlichen prismenförmig mit rechtwinkligem Querschnitt ausgebildet sind.

3. Vorrichtung (1) nach einem der Ansprüche 1 oder 2, **dadurch gekennzeichnet, dass** die erste (11) und zweite (21) ausgeformte Verbindungsfläche unter einem Winkel von 45° geneigt sind.

4. Vorrichtung (1) nach einem der Ansprüche 1 oder 2, **dadurch gekennzeichnet, dass** die erste (11) und zweite (21) ausgeformte Verbindungsfläche unter einem Winkel von 30° geneigt sind.

5. Vorrichtung (1) nach einem der Ansprüche 1 bis 4, **dadurch gekennzeichnet, dass** das erste (10) und das zweite (20) Element ein Loch oder mehrere Löcher (33) zur Positionierung des ersten (61) und zweiten (62) Befestigungsmittels aufweisen.

6. Vorrichtung (1) nach Anspruch 5, **dadurch gekennzeichnet, dass** die Positionierungslöcher (33) auf einer ersten Seite (35) des ersten (10) und zweiten (20) Elements vorgesehen sind.

7. Vorrichtung (1) nach einem der Ansprüche 5 oder 6, **dadurch gekennzeichnet, dass** das erste (61) und/oder zweite (62) Befestigungsmittel aus Schrauben (70) besteht.

8. Vorrichtung (1) nach Anspruch 7, **dadurch gekennzeichnet, dass** die Positionierungslöcher (33) eine radiale Erweiterung (36) besitzen, um das Einsetzen der Schrauben (70) zu erleichtern.

9. Vorrichtung (1) nach einem oder mehreren der Ansprüche von 1 bis 8, **dadurch gekennzeichnet, dass** die Verbindungsmittel (50) einen axialen Zuganker (51) umfassen, der geeignet ist, in den ersten Hohlraum (13) eingesetzt und in einen ersten Gewindeabschnitt (53) des zweiten Hohlraums (23) eingeschraubt zu werden.

10. Vorrichtung (1) nach einem oder mehreren der Ansprüche von 1 bis 8, **dadurch gekennzeichnet, dass** Verbindungsmittel (50) einen axialen Zuganker (51) zum Einsetzen durch den ersten Hohlraum (13) und den zweiten Hohlraum (23) zum Verschrauben mit einer Mutter an der Außenseite umfassen.

11. Komponente (15, 25) einer Anordnung, **dadurch gekennzeichnet, dass** sie wenigstens ein erstes Element (10) und wenigstens ein zweites Element (20) einer Vorrichtung (1) gemäß einem oder mehreren der Ansprüche von 1 bis 10 umfasst, wobei das erste und das zweite Element geeignet sind, mit zugeordneten ersten und zweiten Elementen an einer zweiten gleichen Komponente über Verbindungsmittel (50) verbunden zu werden, die in den Hohlräumen des ersten und zweiten Elements enthalten sind.

12. Komponente (15, 25) nach Anspruch 11, **dadurch gekennzeichnet, dass** sie eine längliche Nut (88) zur Aufnahme des ersten (10) und/oder zweiten (20) Elements dieser Vorrichtung (1) umfasst.

13. Komponente (15, 25) nach einem der Ansprüche 11 oder 12, **dadurch gekennzeichnet, dass** sie aus einem paneelförmigen Körper besteht.

14. Anordnung (2), **dadurch gekennzeichnet, dass** sie wenigstens eine erste (15) und eine zweite (25) Komponente gemäß einem oder mehreren der Ansprüche von 11 bis 13 umfasst.

15. Anordnung (2) nach Anspruch 14, **dadurch gekennzeichnet, dass** die ersten (15) und die zweiten (25) Komponenten miteinander mittels einer Vorrichtung (1) gemäß einem oder mehreren der Ansprüche von 1 bis 10 verbunden sind, wobei die ersten (15) bzw. die zweiten (25) Komponenten erste (10) und zweite (20) Elemente umfassen, die durch Verbindungsmittel (50) verbunden sind.

16. Anordnung (2) nach Anspruch 15, **dadurch gekennzeichnet, dass** die erste Komponente (15) eine Mehrzahl der ersten Elemente (10) und die zweite Komponente (25) eine Mehrzahl der zweiten Elemente (20) umfasst und jedes der ersten Elemente (10) mit einem zugeordneten zweiten Element (20) durch das Verbindungsmittel (50) verbunden ist.

17. Anordnung (2) nach Anspruch 16, **dadurch gekennzeichnet, dass** die erste Komponente (15) ein erstes oberes Element (10a) und ein erstes unteres Element (10b) der Mehrzahl von ersten Elementen und die zweite Komponente (16) ein zweites oberes Element (20a) und ein zweites unteres Element (20b) der Mehrzahl von zweiten Elementen umfasst, wobei das erste obere Element (10a) mit dem zweiten oberen Element (20a) durch das Verbindungsmittel (50) verbunden ist.

18. Anordnung nach Anspruch 17, **dadurch gekennzeichnet, dass** die erste Komponente (15) ein erstes Zwischenelement (10c) der Mehrzahl von ersten Elementen und die zweite Komponente (25) ein zweites Zwischenelement (25c) der Mehrzahl zweiter Elemente umfasst, wobei das erste obere Element (10a) mit dem zweiten oberen Element (20a) durch das Verbindungsmittel (50) verbunden ist.

## Revendications

1. Dispositif (1) de raccordement de composants (15, 25) d'une structure de panneau, **caractérisé en ce qu'**il comprend :
- un premier élément (10) comprenant au moins une première surface de couplage façonnée (11) et un premier moyen de fixation (61) permettant de raccorder ledit premier élément (10) à un premier (15) desdits composants, ledit premier élément (10) comprenant une première cavité longitudinale (13) ;
- un second élément (20) comprenant au moins une seconde surface de couplage façonnée (21) convenant à ladite première surface (11) et un second moyen de fixation (62) pour raccorder ledit second élément (20) à un second (25) desdits composants, ledit second élément (20) comprenant une seconde cavité longitudinale (23) ; ledit dispositif (1) comprenant un moyen de raccordement (50) contenu dans lesdites cavités (13, 23),
**caractérisé en ce que** lesdites première et seconde surfaces de couplage façonnées (11) sont plates et inclinées par rapport à un plan (X) situé sensiblement à angle droit par rapport à un axe longitudinal desdits éléments (10, 20), ledit moyen de raccordement (50) est agencé pour exercer une force suffisante pour amener ledit second élément (20) en contact avec ledit premier élément (10) en correspondance desdites surfaces de couplage façonnées (11, 21).

2. Dispositif (1) selon la revendication 1, **caractérisé en ce que** lesdits éléments (10, 20) sont sensiblement en forme de prisme avec une section rectangulaire.

3. Dispositif (1) selon la revendication 1 ou 2, **caractérisé en ce que** lesdites première (11) et seconde (21) surfaces de couplage façonnées s'inclinent à un angle de 45°.

4. Dispositif (1) selon la revendication 1 ou 2, **caractérisé en ce que** lesdites première (11) et seconde (21) surfaces de couplage façonnées s'inclinent à un angle de 30°.

5. Dispositif (1) selon l'une ou plusieurs des revendications 1 à 4, **caractérisé en ce que** lesdits premier (10) et second (20) éléments comprennent un ou plusieurs trous (33) permettant de positionner lesdits premier (61) et second moyens (62) de fixation.

6. Dispositif (1) selon la revendication 5, **caractérisé en ce que** lesdits trous de positionnement (33) sont disposés sur un premier côté (35) desdits premier (10) et second (20) éléments.

7. Dispositif (1) selon la revendication 5 ou 6, **caractérisé en ce que** lesdits premier (61) et/ou second (62) moyens de fixation consistent en des vis (70).

8. Dispositif (1) selon la revendication 7, **caractérisé en ce que** lesdits trous de positionnement (33) ont un élargissement radial (36) pour faciliter l'insertion desdites vis (70).

9. Dispositif (1) selon l'une ou plusieurs des revendications 1 à 8, **caractérisé en ce que** lesdits moyens de raccordement (50) comprennent un tirant axial (51) approprié pour être inséré dans ladite cavité (13) et être vissée dans une première extension filetée (53) de ladite seconde cavité (23).

10. Dispositif (1) selon l'une ou plusieurs des revendications 1 à 8, **caractérisé en ce que** lesdits moyens de raccordement (50) comprennent un tirant axial (51) pour insertion à travers ladite première (13) et ladite seconde (13) cavité pour vissage dans un écrou sur l'extérieur.

11. Composant (15, 25) d'une structure **caractérisé en ce qu'**il comprend au moins un premier élément (10) et au moins un second élément (20) d'un dispositif (1) selon l'une ou plusieurs des revendications de 1 à 10, dans lequel lesdits premier et second éléments sont agencés pour se coupler avec des premier et second éléments correspondants sur un second composant identique via des moyens de raccordement (50) contenus dans les cavités des premier et second éléments.

12. Composant (15, 25) selon la revendication 11, **caractérisé en ce qu'**il comprend une rainure longitudinale (88) permettant de contenir ledit premier (10) et/ou ledit second élément (20) dudit dispositif (1).

13. Composant (15, 25) selon la revendication 11 ou 12, **caractérisé en ce qu'**il consiste en un corps en forme de panneau.

14. Structure (2) **caractérisée en ce qu'**elle comprend au moins un premier (15) et un second (25) composant selon l'une ou plusieurs des revendications 11 à 13.

15. Structure (2) selon la revendication 14, **caractérisée en ce que** lesdits premier (15) et second (25) composants sont raccordés ensemble au moyen d'un dispositif (1) selon l'une ou plusieurs des revendications 1 à 10, lesdits premier (15) et second (20) composants comprenant respectivement des premier (10) et second (20) éléments raccordés ensemble par des moyens de raccordement (50).

16. Structure (2) selon la revendication 15, **caractérisée en ce que** ledit premier composant (15) comprend une pluralité desdits premiers éléments (10) et ledit second composant (25) comprend une pluralité desdits seconds éléments (20), chacun desdits premiers éléments (10) étant raccordé à un second élément (20) correspondant par lesdits moyens de raccordement (50).

17. Structure (2) selon la revendication 16, **caractérisée en ce que** ledit premier composant (15) comprend un premier élément supérieur (10a) et un premier élément inférieur (10b) de ladite pluralité desdits premiers éléments et ledit second composant (16) comprend un second élément supérieur (20a) et un second élément inférieur (20b) de ladite pluralité de seconds éléments, ledit premier élément supérieur (10a) étant raccordé audit second élément supérieur (20a) par lesdits moyens de raccordement (50).

18. Structure selon la revendication 17, **caractérisée en ce que** ledit premier composant (15) comprend un premier élément intermédiaire (10c) de ladite pluralité desdits premiers éléments et ledit second composant (25) comprend un second élément intermédiaire (20c) de ladite pluralité de seconds éléments, ledit premier élément supérieur (10a) étant raccordé audit second élément supérieur (20a) par lesdits moyens de raccordement (50).
